# EUROPÄISCHE PATENTANMELDUNG

(11) **EP 2 278 527 A2**
(43) Veröffentlichungstag der Anmeldung: **26.01.2011**
(21) Anmeldenummer: 10005297.6
(22) Anmeldetag: 20.05.2010
(51) Int. Cl.: G06K 7/08, G06K 19/07

(54) **RFID-Chipkarten-Interface**

(30) Priorität: 22.05.2009 DE 202009007333 U
(71) Anmelder: STOCKO Contact GmbH & Co. KG, 42327 Wuppertal (DE)
(72) Erfinder: Klatt, Dieter, 42489 Wülfrath (DE)
(74) Vertreter: Stenger, Watzke & Ring

(57) **Zusammenfassung**

Die Erfindung betrifft ein Chipkarteninterface, insbesondere eine RFID-Chipkarten-Interfacekarte. Um eine Interfacekarte bereitzustellen, mit welcher ein herkömmliches Chipkartenlesegerät zu einem RFID-System-Gerät umgewandelt bzw. aufgerüstet werden kann, wird mit der Erfindung vorgeschlagen eine RFID-Chipkarten-Interfacekarte, mit
- einem Kartenkörper (2),
- einem Kontaktfeld (3) für die leitende Kontaktierung mit einem Chipkontaktfeld (11),
- einer Schaltung (5) für die Kommunikation mit RFID-Elementen,
- einer elektrischen Verbindung (4) zwischen Kontaktfeld (3) und Schaltung (5) und
- einer Steuerung zur Leitung von Daten zwischen Schaltung (5) und Kontaktfeld (3),

wobei die Schaltung (5) an einem bei bestimmungsgemäßem Einsatz aus einem Chipkartenlesegerät (10) freiliegend herausragenden Randbereich des Kartenkörpers (2) angeordnet ist.

## Beschreibung

Die vorliegende Erfindung betrifft eine Interfacekarte, insbesondere eine RFID-Chipkarten-Interfacekarte.

Chipkarten sind im Stand der Technik umfangreich bekannt und im breiten umfassenden Einsatz. Die Chipkarten sind in der Regel nach ISO 7816 ausgebildet, haben eine vorgegebene Dimensionierung hinsichtlich Länge, Breite, Höhe und insbesondere eine genaue Positionierung ,eines Chips mit den entsprechenden Kontaktpunkten. Dementsprechend ist nach ISO 7816 ein Chipkartenlesegerät so aufgebaut, dass eine Chipkarte einführbar ist und der an der vorgegebenen Position befindliche Chip direkt mit einem an einer vorgegebenen Position angeordneten Chipkartenkontaktfeld in Verbindung kommt.

Chipkarten werden für die unterschiedlichsten Einsätze verwendet, bisher beispielsweise als Kreditkarten, Telefonkarten und dergleichen, zukünftig auch als elektronischer Personalausweis, Sicherheitskarte und so weiter.

Aus dem Stand der Technik sind auch Chipkarten bekannt geworden, die mehrere Schnittstellen bereitstellen, so zum Beispiel aus der EP-A1-1 855 231.

Aus der EP-A1-1 855 231 ist ein Datenträger bekannt geworden, der insbesondere zur Verwendung als Gesundheitskarte dient. Der Datenträger weist eine integrierte Schaltung mit einer ersten Schnittstelle auf. Über diese Schnittstelle ist ein Datenaustausch mit einem Chipkartenleser möglich. Der Datenträger verfügt darüber hinaus über eine zweite Schnittstelle, die beispielsweise zum Datenaustausch mit einem Rechner dient.

Aus dem Stand der Technik sind auch Chipkarten bekannt geworden, welche dazu geeignet sind, über ein Übertragungsmedium eine Kommunikationsverbindung aufzubauen. So offenbart beispielsweise die DE-A1-10 2007 026 530 eine Chipkarte mit einer Schnittstelleneinrichtung, die es gestattet, über ein Übertragungsmedium eine Kommunikationsverbindung zu einer anderen Chipkarte aufzubauen.

Neben den vorgenannten Chipkarten und Chipkartenlesegeräten nach ISO 7816 gibt es auch in unterschiedlichen Bauformen RFID-Lesegeräte. Die RFID-Technologie wiederum (Radio Frequency Identification) wird für die unterschiedlichsten Einsatzbereiche verwendet. Sie ist insbesondere kontaktlos und ein RFID-Transponder kann beispielsweise abgefragt und identifiziert, aber auch beschrieben werden. Es gibt unterschiedliche RFID-Transpondertypen für unterschiedliche Einsatzzwecke.

Als ISO 7816-Chipkartenlesegeräte einerseits bzw. RFID-Lesegeräte andererseits gibt es für den PC-Gebrauch unterschiedliche Bauformen, beispielsweise:
- USB-Leser extern - Tischgerät für Chipkarten
- USB-Leser extern - Tischgerät für RFID-Transponderkarten
- USB-Sticks für RFID-Transponderkarten
- ExpressCard-Module für Chipkarten
- ExpressCard-Module für RFID-Transponderkarten
- SD-Card-Leser für RFID-Transponderkarten
- Kombileser - Tischgerät für Chipkarten und RFID-Transponderkarten
- PCMCIA-Leser für Chipkarten
- integrierte Chipkartenleser in Desktops/Notebooks
- Tastaturen mit integriertem Chipkartenleser

Einerseits müssen also Verbraucher sich entweder grundsätzlich entscheiden, ob Sie ein Chipkartenlesegerät einerseits oder ein RFID-Systemgerät andererseits einsetzen, oder sie haben unterschiedliche externe Gehäuse, eine Vielzahl von unterschiedlichen Schlitzen oder Baueinheiten im Computer oder dergleichen.

Der vorliegenden Erfindung liegt die **Aufgabe** zugrunde, eine Interfacekarte bereitzustellen, mit welcher ein herkömmliches Chipkartenlesegerät zu einem RFID-System-Gerät umgewandelt bzw. aufgerüstet werden kann.

Zur technischen **Lösung** dieser Aufgabe wird mit der Erfindung vorgeschlagen, eine Interfacekarte mit
- einem Kartenkörper,
- einem Kontaktfeld für die leitende Kontaktierung mit einem Chipkontaktfeld,
- einer Schaltung für die Kommunikation mit RFID-Elementen,
- einer elektrischen Verbindung zwischen Kontaktfeld und Schaltung und
- einer Steuerung zur Leitung von Daten zwischen Schaltung und Kontaktfeld, wobei die Schaltung an einem bei bestimmungsgemäßem Einsatz aus einem Chipkartenlesegerät freiliegend herausragenden Randbereich des Kartenkörpers angeordnet ist.

Mit dieser Erfindung können vorhandene Chipkartenleser in den Bauformen PCMCIA, Expresscard, Tastaturen, interne Lesegeräte in Desktops und Notebooks, externe Tischlesegeräte mit USB-Anschluss und dergleichen zu Kombigeräten aufgerüstet werden. Das Chipkarteninterface bzw. die Interfacekarte wird wie eine Chipkarte in ein Chipkartenlesegerät eingeschoben. Das Kontaktfeld kontaktiert dabei das Chipkontaktfeld des Chipkartenlesegerätes. Auf diese Weise wird auch zunächst die Stromversorgung der Interfacekarte sichergestellt. Auf der Interfacekarte befindet sich eine Schaltung zur Nutzung der RFID-Technologie, die wenigstens eine Antenne, einen Microcontroller als Steuerung sowie einen RFID-Controllerchip umfasst. Darüber hinaus gehören eine Reihe aktiver und passiver Bauteile dazu. Die Schaltung selbst ist dann in der Lage, mit RFID-Elementen in Kommunikation zu treten, also Transponder auszulesen, zu beschreiben und dergleichen. Über den Microcontroller werden die RFID-Signale dann zum Kontaktfeld und dort entsprechend über das Chipkartenlesegerätkontaktfeld zur weiteren Verarbeitung bereitgestellt.

Da es sich im Stand der Technik zum Teil um sehr hochwertige Lesegeräte mit Tastatur, Display (beispielsweise für die sichere PIN-Eingabe) und dergleichen Geräte hoher Sicherheitsklassen (2 und 3) handelt, werden diese hochwertigen Geräte nunmehr auch für die RFID-Technologie einsatzfähig. Die kleine, kompakte Bauform ermöglicht insbesondere den Einsatz bei Notebooks mit integriertem Chipkartenleser.

Mit der Erfindung wird eine mit geringem wirtschaftlichen Aufwand herstellbare, eine hohe Funktionalität bereitstellende Interfacekarte vorgeschlagen, die Chipkartenlesegeräte erheblich aufwertet und für den elektronischen Geschäfts- und Rechtsverkehr beispielsweise hinsichtlich digitaler Signatur, für biometrische Datenerkennung, für sicheres Online-Banking, Internet-Warenkauf, Steuererklärungen, Behördenvorgänge, papierlose Kommunikation und dergleichen ein Höchstmaß an Sicherheit und Einsatzbreite bereitstellt.

Mit der erfindungsgemäß vorgesehenen Interfacekarte wird in vorteilhafter Weise die Möglichkeit geschaffen, ein aus dem Stand der Technik an sich bekanntes Chipkartenlesegerät optional auch als RFID-Lesegerät verwenden zu können. Dies wird durch einfaches Einschieben der Interfacekarte in das Chipkartenlesegerät erreicht. Nach abgeschlossenem RFID-Lesevorgang kann die erfindungsgemäße Interfacekarte aus dem Chipkartenlesegerät wieder entfernt werden, so dass dieses wieder als herkömmliches Chipkartenlesegerät Verwendung finden kann. Die erfindungsgemäße Interfacekarte kann insofern auch als "Adapter" bezeichnet werden, der es ermöglicht, einen einfachen "Single-Reader" als "Multi-Reader" zu nutzen.

Eine besondere Anwendung findet die erfindungsgemäße Ausgestaltung beispielsweise bei Autorisationsvorgängen. In den Chipkartenleser, das heißt das Chipkartenlesegerät, soll beispielsweise eine Flashcard zwecks Datenauslesung eingeschoben werden. Die auszulesenden Daten sind codiert und es bedarf deshalb der vorherigen Freischaltung. Diese Freischaltung kann beispielsweise mittels eines elektronischen Ausweises erfolgen. Um dies zu bewerkstelligen ist in das Chipkartenlesegerät die erfindungsgemäße Interfacekarte einzuführen. Mittels der Interfacekarte kann sodann die Autorisierung mittels des elektronischen Ausweises erfolgen. Sobald dies geschehen ist, ist die erfindungsgemäße Interfacekarte aus dem Chipkartenlesegerät wieder zu entfernen und die beispielsweise als Flashkarte ausgebildete Chipkarte zwecks Datenauslesung in das Chipkartenlesegerät einzuführen. Mit ein und demselben Chipkartenlesegerät kann sowohl die Datenauslesung als auch die Autorisierung erfolgen, wobei die Autorisierung mittels der erfindungsgemäß vorgesehenen Interfacekarte durchgeführt wird.

Die erfindungsgemäß ausgestaltete Interfacekarte kann in Verbindung mit vorbekannten Chipkartenlesegeräten in bestimmungsgemäßer Weise verwendet werden, was eine Nachrüstung auch von Altgeräten in vorteilhafter Weise ermöglicht. Insbesondere kostenaufwändige Nachrüstarbeiten existierender Altgeräte wie beispielsweise Rechner, Notebooks, Laptops und/oder dergleichen entfallen. Das erfindungsgemäße Karteninterface kann in die Chipkartenlesegeräte bestehender Rechner, Notebooks, Laptops und/oder dergleichen eingeführt und so zur Nutzung der RFID-Technologie aufgerüstet werden.

Insbesondere bei Ausbildung des Kartenkörpers gemäß einer Chipkarte - gegebenenfalls abgesehen von den Rundungen der Ecken und dergleichen - insbesondere nach ISO 7816 können fast alle am Markt befindlichen Chipkartenlesegeräte aufgerüstet werden.

Die Leiterbahnen für die Kommunikation und die elektrische Versorgung können auf oder in den Datenträger nach Multilayer-Technik ausgebildet sein. Vorgesehen ist gemäß der Erfindung auch ein magnetisches Feld für passive RFID-Karten (Mifare) und dergleichen. Die RFID-Antenne zumindest muss für bestimmte Anwendungen zumindest aus dem Chipkartenlesegerätegehäuse frei herausstehend positionierbar sein. Die Länge des Kartenkörpers ist variabel. Der Kartenkörper kann aus Kunststoff oder einem handelsüblichen Leiterplattenmaterial, beispielsweise FR4, hergestellt sein. Die elektronischen Bauteile werden auf dem Kartenkörper oder dem verlängerten Ansatzstück des Kartenkörpers direkt aufgesetzt und mit einer Abdeckhaube, beispielsweise aus Kunststoff, verschlossen. Das Ansatzstück beispielsweise kann vorproduzierbar sein und beispielsweise über Steckkontakte, Leiterfolie oder dergleichen mit dem übrigen Kartenkörper verbunden werden.

Neben dem Einsatz für RFID-Technologie können auch Frequenzbänder wie LF, HF, UHF oder gar Mikrowellenbereiche einbezogen werden. Das Ansatzstück kann mit einer Drehachse versehen sein, um beispielsweise die in dem aus dem Gehäuse des Chipkartenlesegerätes herausstehenden Bereiche der Interfacekarte angeordnete Antenne in eine bestimmte Position (horizontal, vertikal, schräg ...) bewegen zu können.

Je nach Energiebedarf kann die Energieversorgung über das Kontaktfeld des Chipkartenlesegerätes erfolgen oder durch zusätzliche Unterstützung mit Akkumulatoren, Kondensatoren und dergleichen.

Die mechanische Ausbildung mit Griffkerben, Rippen, Einbuchtungen oder sonstigen Handhabeelementen zum besseren Einschieben und Ausziehen der Interfacekarte liegen ebenfalls im Rahmen der Erfindung.

Weitere Vorteile und Merkmale der Erfindung ergeben sich aus der folgenden Beschreibung anhand der Figuren. Dabei zeigen:
- Fig. 1: eine schematische Darstellung einer Interface-Karte in Bezug auf ein Chipkartenlesegerät (Expresskarte);
- Fig. 2: unterschiedliche Komponenten des Einsatzbereiches;
- Fig. 3: eine Darstellung gemäß Fig. 1 mit einer ISO-Chipkarte im Vergleich;
- Fig. 4: unterschiedliche Transponderkarten im Zusammenwirken mit der erfindungsgemäßen Interfacekarte und
- Fig. 5: eine Detaildarstellung des Aufbaus der erfindungsgemäßen Interfacekarte.
In den Fig. sind gleiche Elemente mit gleichen Bezugszeichen versehen.

In allen Fig. ist die erfindungsgemäße Interfacekarte 1 gezeigt. Diese verfügt über einen Kartenkörper 2, auf welchem ein Kontaktfeld 3 zum Anschluss an ein Chipkontaktfeld 11 eines Chipkartenlesers an vorgegebener Stelle positioniert ist, insbesondere nach der ISO 7816-Norm. Über Leiterbahnen 4, die beispielsweise nach Multilayer-Technik in den Kartenkörper 2 eingebettet sind, ist das Kontaktfeld 3 mit der Schaltung 5 verbunden, die in einem Randbereich der Interfacekarte 1 positioniert ist. Dort können auch Kontaktstifte 7 sowie Antennenfelder 8 ausgebildet sein. Eine Abdeckung 6 dient einerseits dem Schutz durch Aufstecken, kann aber über Kontakte wiederum mit den Kontaktstiften 7 verbunden werden und ebenfalls ein Antennenfeld aufweisen.

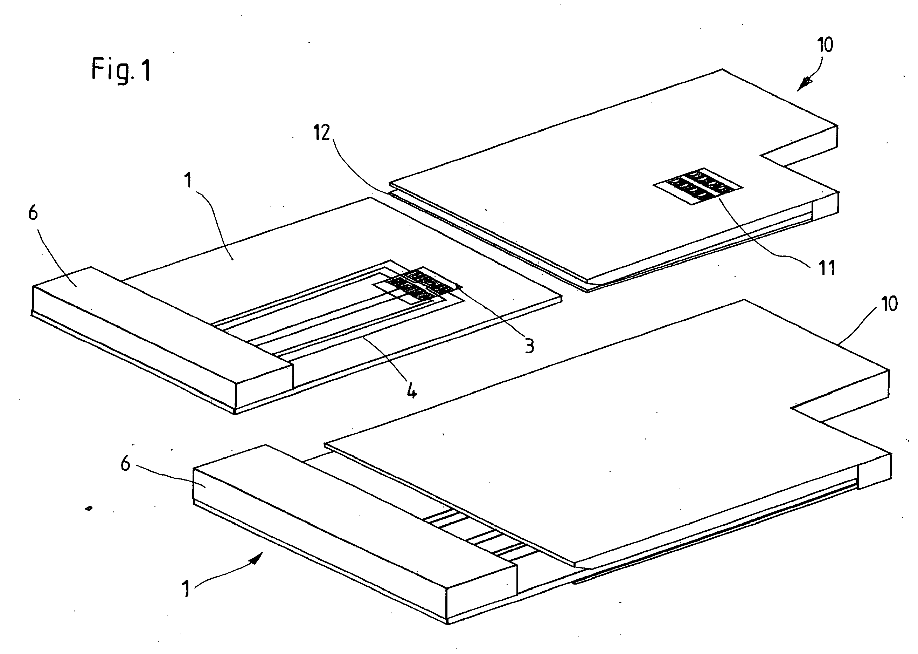

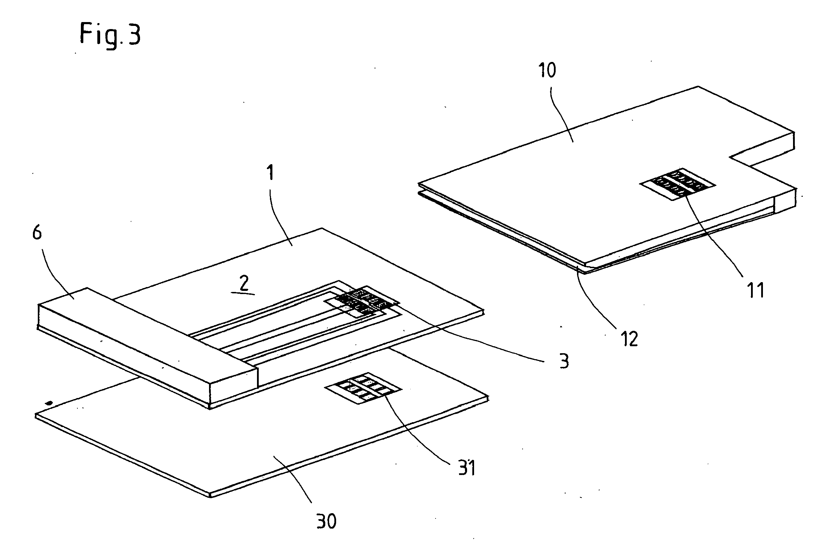

Wie in den Fig. 1 und 3 zu sehen, wird eine solche Interfacekarte 1 in ein Chipkartenlesegerät 10 eingesetzt, welche nach ISO an vorgegebener Position ein Chipkontaktfeld 11 aufweist. Normalerweise wird - wie dies beispielsweise in Fig. 3 gezeigt ist - eine Chipkarte 30, die an einem festgelegten Platz den Chip 31 aufweist, in den Einschubschlitz 12 des Chipkartenlesegerätes 10 eingeschoben. Anstelle dessen wird nunmehr erfindungsgemäß die Interfacekarte 1 in den Einfuhrschlitz 12 eingeschoben, bis die Kontaktfelder 3 und 11 in Deckung sind. Nunmehr kann die Interfacekarte 1 über das Chipkontaktfeld 3/11 mit dem Chipkartenlesegerät und der dahinterstehenden Intelligenz, beispielsweise einem Computer, kommunizieren.

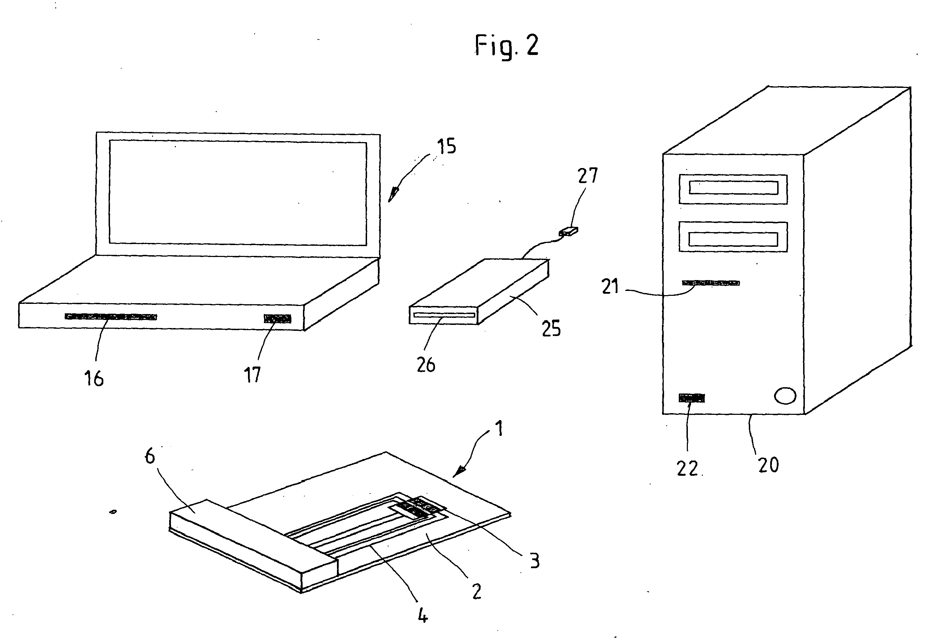

Fig. 2 zeigt unterschiedliche Einsatzbereiche. Beispielsweise weist ein Notebook 15 den Schlitz 16 eines Chipkartenlesegerätes auf, in welchen die Interfacekarte 1 direkt einsetzbar ist. Die Abdeckung 6 bleibt vorzugsweise freiliegend draußen, um eine ungehinderte berührungslose Kommunikation mit RFID-Elementen nicht zu stören.

Gleiches gilt für einen Computer 20, der einen Schlitz 21 für ein Chipkartenlesegerät aufweist, oder direkt für ein Chipkartenlesegerät 25, in dessen Schlitz 26 die Interfacekarte 1 einsteckbar ist. Das externe Chipkartenlesegerät 25 weist einen USB-Stecker 27 auf, der mit einem USB-Anschluss 17 eines Notebooks 15 oder dem USB-Anschluss 22 eines Computers 20 verbindbar ist.

Auf diese Weise sind die RFID-Kommunikationssignale - Sendung und Empfang - über die Interfacekarte 1 steuerbar und durch den entsprechenden Computer auswertbar.
Fig. 3 zeigt, dass eine Chipkarte 30 nach ISO-Norm den Chip 31 an vorgegebener Position aufweist, und dass die Interfacekarte 1 nach der Erfindung das Kontaktfeld 3 an der identischen Position aufweist.

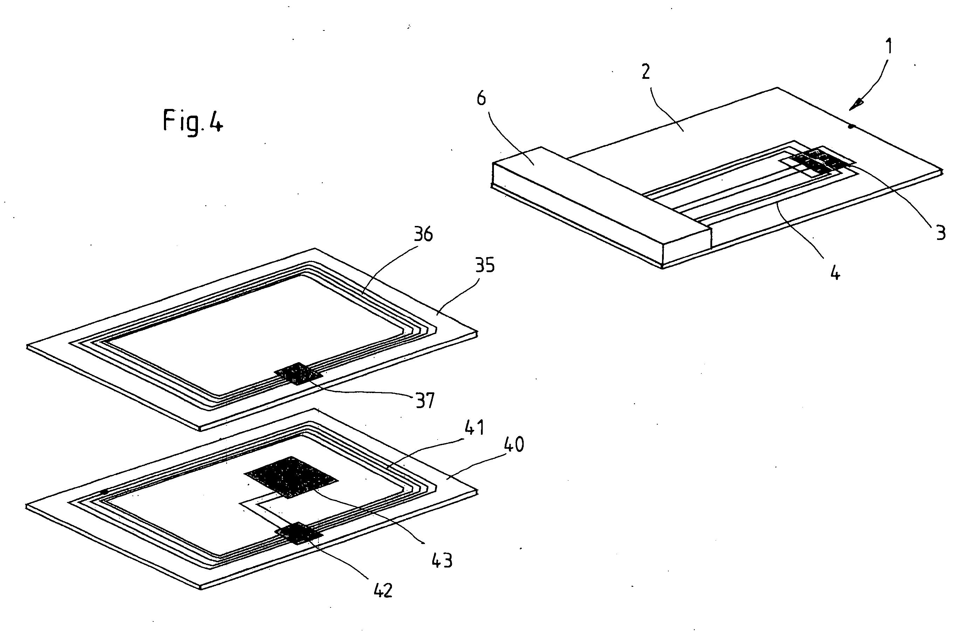

Fig. 4 zeigt RFID-Karten 35, 40, mit welchen die Interfacekarte 1 über die unter der Abdeckung 6 befindliche Schaltung kommunizieren kann. Die RFID-Karten 35, 40 weisen die Antennen 36, 41 auf und die RFID-Transponderchips 37, 42. Die RFID-Karte 40 hat darüber hinaus noch einen Controllerchip 43. Es handelt sich um eine aktive RFID-Karte.

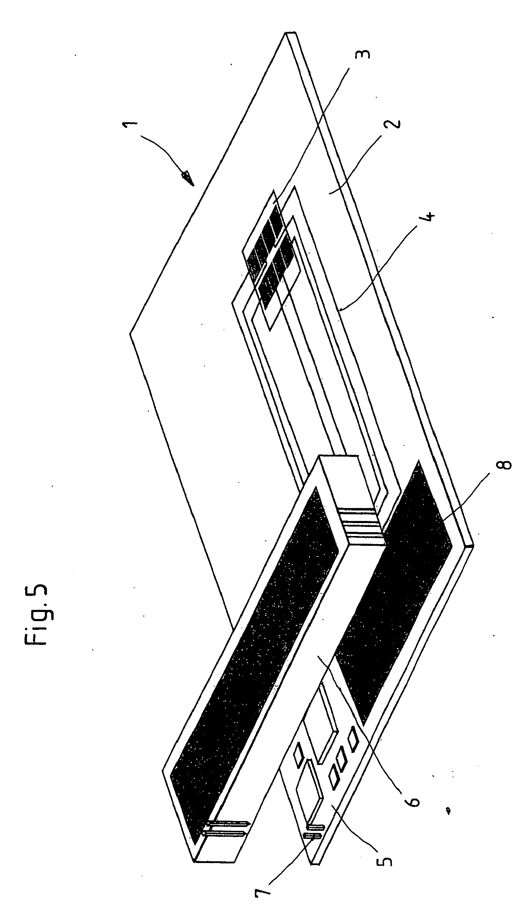

Die erfindungsgemäße Interfacekarte ist in einer vergrößerten Detailansicht in Fig. 5 in schematisch perspektivischer Darstellung gezeigt. Die Interfacekarte verfügt in vorbeschriebener Weise über einen Kartenkörper 2, der ein Kontaktfeld 3 trägt. In Fig. 5 sind gut die Leiterbahnen 4 zu erkennen, die das Kontaktfeld 3 mit der Schaltung 5 kommunikationstechnisch verbinden. Eine kastenförmig ausgebildete Abdeckung 6 dient im endmontierten Zustand dem Schutz der Schaltung 5. Die Abdeckung 6 kann darüber hinaus als Trägerelemente für Antennenfelder dienen, zu deren Kontaktierung Kontaktstifte 7 im gezeigten Ausführungsbeispiel vorgesehen sind.

Die beschriebenen Ausführungsbeispiele dienen lediglich der Erläuterung und sind nicht beschränkend.

### Bezugszeichenliste

- 1: Interfacekarte
- 2: Kartenkörper
- 3: Kontaktfeld
- 4: Leiterbahnen
- 5: Schaltung
- 6: Abdeckung
- 7: Kontakte
- 8: Antennenbereich
- 10: Chipkartenlesegerät
- 11: Chipkontaktfeld
- 12: Einschubschlitz
- 15: Notebook
- 16: Chipkartenleser
- 17: USB-Anschluss
- 20: Computer
- 21: Chipkartenleser
- 22: USB-Anschluss
- 25: Chipkartenlesegerät
- 26: Einschubschlitz
- 27: USB-Stecker
- 30: Chipkarte
- 31: Chip
- 35: RFID-Karte
- 36: Antenne
- 37: RFID-Transponderchip
- 40: RFID-Karte
- 41: Antenne
- 42: RFID-Transponderchip
- 43: Controllerchip

## Patentansprüche

1. Chipkarteninterface, insbesondere eine RFID-Chipkarten-Interfacekarte, mit
- einem Kartenkörper (2),
- einem Kontaktfeld (3) für die leitende Kontaktierung mit einem Chipkontaktfeld (11),
- einer Schaltung (5) für die Kommunikation mit RFID-Elementen,
- einer elektrischen Verbindung (4) zwischen Kontaktfeld (3) und Schaltung (5) und
- einer Steuerung zur Leitung von Daten zwischen Schaltung (5) und Kontaktfeld (3),
wobei die Schaltung (5) an einem bei bestimmungsgemäßem Einsatz aus einem Chipkartenlesegerät (10) freiliegend herausragenden Randbereich des Kartenkörpers (2) angeordnet ist.

2. Interfacekarte nach Anspruch 1, **dadurch gekennzeichnet, dass** der Kartenkörper (2) eine Dimensionierung einer Chipkarte insbesondere nach ISO 7816 aufweist.

3. Interfacekarte nach einem der vorhergehenden Ansprüche, **dadurch gekennzeichnet, dass** das Kontaktfeld (3) nach ISO 7816 an einer für den Einsatz in einem Chipkartenlesegerät (10) vorgesehenen Position des Kartenkörpers (2) angeordnet ist.

4. Interfacekarte nach einem der vorhergehenden Ansprüche, **dadurch gekennzeichnet, dass** die Schaltung (5) wenigstens eine Antenne, einen RFID Controller Chip sowie einen Microcontroller aufweist.

5. Interfacekarte nach einem der vorhergehenden Ansprüche, **dadurch gekennzeichnet, dass** diese über das Kontaktfeld (3) mit Energie versorgt ist.

6. Interfacekarte nach einem der vorhergehenden Ansprüche, **dadurch gekennzeichnet, dass** diese einen Akkumulator aufweist.

7. Interfacekarte nach einem der vorhergehenden Ansprüche, **dadurch gekennzeichnet, dass** diese mechanische Handhabeelemente aufweist.
